# EUROPÄISCHE PATENTSCHRIFT

(11) **EP 2 976 827 B1**
(45) Veröffentlichungstag und Bekanntmachung des Hinweises auf die Patenterteilung: **25.01.2017**
(21) Anmeldenummer: 14711959.8
(22) Anmeldetag: 19.03.2014
(51) Int. Cl.: H02K 1/27, H02K 15/03, H02K 29/03

(54) **ELEKTROMOTOR MIT INNENROTOR UND AUSSENSTATOR**
ELECTRIC MOTOR COMPRISING AN INTERNAL ROTOR AND AN EXTERNAL STATOR
MOTEUR ÉLECTRIQUE À ROTOR INTERNE ET STATOR EXTERNE

(30) Priorität: 19.03.2013 DE 102013102822
(43) Veröffentlichungstag der Anmeldung: 27.01.2016
(73) Patentinhaber: Ebm-Papst St. Georgen GmbH & CO. KG, 78112 St. Georgen (DE)
(72) Erfinder: HELBLING, Sergej, 78050 Villingen-Schwenningen (DE)
(74) Vertreter: Raible Deissler Lehmann Patentanwälte PartG mbB
(86) Internationale Anmeldenummer: PCT/EP2014/055465
(87) Internationale Veröffentlichungsnummer: WO 2014/147102

(56) Entgegenhaltungen:
- JP-A- 2012 050 331
- US-A1- 2013 002 082

## Beschreibung

Die Erfindung betrifft einen nach Art eines Innenläufermotors ausgebildeten Elektromotor mit einem Außenstator und einem drehbeweglich in dem Außenstator angeordneten Innenrotor mit Permanentmagneten.

Derartige Innenläufermotoren werden wegen ihres niedrigen axialen Trägheitsmoments beispielsweise für Antriebsaufgaben verwendet, bei denen ein Elektromotor mit seinen Bewegungen elektrischen Befehlen sehr schnell folgen muss, z.B. als Servomotor. In einem solchen Motor dürfen die Permanentmagnete des Innenrotors, welche in einem dem Innenrotor zugeordneten Blechpaket angeordnet sind, nicht klappern und sich auch bei höheren Drehzahlen nicht in axialer Richtung verschieben, d.h. sie müssen in axialer und radialer Richtung sicher im Blechpaket fixiert sein. Im Automotive-Bereich wird beispielsweise für extreme Einsatzbereiche verlangt, dass die Magneten bei Stößen mit einer Beschleunigung von 50 g fest im Innenrotor bleiben. Zu diesem Zweck kann man die Permanentmagnete in das Blechpaket einkleben, oder zusätzlich an beiden Enden des Blechpakets jeweils eine geeignete, die Magneten abdeckende Sicherungsscheibe befestigen. Auch kann man das Blechpaket mit Kunstharz vergießen, wobei alle diese Verfahren zusätzliche Arbeitsschritte, Zeit und auch Hilfsmaterialien benötigen. Beim Verkleben sind spezielle Arbeitsplätze mit Absaugung, etc. erforderlich.

Die DE 10 2011 101 730 A1 zeigt einen Innenläufermotor, bei welchem die Permanentmagnete elastisch in einem zugeordneten Blechpaket eingespannt werden. Dies geschieht dadurch, dass mittels eines Werkzeugs Halteabschnitte, welche am Außenumfang des Blechpakets vorgesehen sind, radial nach innen eingedrückt (eingekerbt, eingeprägt) werden. Somit erhält man federnde Eindrückungen (Einkerbungen, Einprägungen), welche jeweils eine radial nach innen wirkende Federkraft F in Richtung einer zugeordneten Ausnehmung ausüben, in welcher ein Permanentmagnet des Innenrotors angeordnet ist, so dass dieser in der Ausnehmung eingespannt wird. Nachteilig hierbei ist, dass die federnden Eindrückungen (Einkerbungen, Einprägungen) über die Lebensdauer des Innenläufermotors nachfedern können, sodass sich die Permanentmagneten in den Ausnehmungen lockern können und somit klappern oder aus den Ausnehmungen herausfallen können.

Die DE 10 2007 029 719 A1 zeigt einen Innenläufermotor, bei welchem an entsprechenden Ausnehmungen eines dem Innenrotor zugeordneten Blechpakets jeweils ein federnder Ansatz vorgesehen ist, welcher im unbelasteten Zustand in eine jeweils zugeordnete Ausnehmung einfedert. Dieser federnde Ansatz wird beim Einschieben eines entsprechenden Permanentmagneten in die Ausnehmung vom Permanentmagneten kraftbeaufschlagt und somit elastisch verformt. Somit kann der federnde Ansatz nach dem Einschieben des Permanentmagneten in die Ausnehmung seinerseits eine zugeordnete Federkraft F gegen den Permanentmagneten ausüben, welche diesen in der Ausnehmung einspannt. Es ist jedoch möglich, dass die federnden Ansätze ebenfalls über die Lebensdauer des Innenläufermotors nachfedern, sodass sich die Permanentmagneten auch bei Verwendung dieser federnden Ansätze in den Ausnehmungen lockern können und somit klappern oder aus den Ausnehmungen herausfallen können.

Die JP 2012 050331 A zeigt einen Elektromotor mit einem Stator und einem Rotor innerhalb des Stators. Der Rotor hat ein Blechpaket mit einer ersten Ausnehmung, in der Rotormagnete angeordnet sind, und mit einer zweiten Ausnehmung, in der eine Rotorachse angeordnet ist. Ein in die erste Ausnehmung hinein ragender Teil des Blechpakets, welcher im Bereich zwischen der ersten Ausnehmung und der zweiten Ausnehmung angeordnet ist, erstreckt sich zwischen zwei in der ersten Ausnehmung angeordneten Magnete und befestigt diese.

Die US 2013/002082 A1 zeigt einen Elektromotor mit einem Außenstator und einem Innenrotor. Der Innenrotor hat ein Rotorpaket mit einer ersten Ausnehmung für Permanentmagneten und einer zweiten Ausnehmung für eine Welle. Eine Aussparung ist in der Nähe der ersten Ausnehmung vorgesehen. Diese Aussparung wird durch einen Stempel geweitet, so dass das Rotorpaket gegen den Permanentmagneten drückt und diesen verklemmt.

Es ist deshalb eine Aufgabe der vorliegenden Erfindung, einen neuen Elektromotor mit einem Innenrotor bereit zu stellen, bei dem Permanentmagnete zur Erregung des Innenrotors axial und radial an diesem lagefixiert werden können. Diese Aufgabe wird durch den Gegenstand des unabhängigen Patentanspruchs gelöst. Bevorzugte Ausführungsformen sind Gegenstand der abhängigen Patentansprüche.

Die Figuren und die Beschreibung zeigen einen Elektromotor, welcher aufweist: Einen Außenstator, einen in dem Außenstator drehbeweglich angeordneten Innenrotor, welcher ein Blechpaket aufweist, welches eine Mehrzahl von Rotorblechen aufweist und in dem mindestens eine erste Ausnehmung und mindestens eine zweite Ausnehmung vorgesehen sind, wobei der ersten Ausnehmung ein darin angeordneter Rotormagnet zugeordnet ist, wobei der zweiten Ausnehmung ein darin angeordnetes Verklemmelement zugeordnet ist, wobei zwischen der ersten Ausnehmung und der zweiten Ausnehmung ein Klemmglied vorgesehen ist, und wobei das Verklemmelement und die zweite Ausnehmung dazu ausgebildet sind,
- ein Abstützen des Verklemmelements am Blechpaket zu ermöglichen, und
- das Klemmglied in Richtung zum Rotormagneten hin mit einer Kraft zu beaufschlagen,
um so den Rotormagneten in der ersten Ausnehmung zu verklemmen, wobei das Blechpaket eine Durchgangsöffnung zur Aufnahme einer Welle aufweist, wobei die zweite Ausnehmung durch die Durchgangsöffnung ausgebildet ist,
und wobei das Verklemmelement durch die Welle ausgebildet ist.

Hierdurch wird eine Verklemmung der Welle mit Hilfe eines Klemmglieds möglich, wobei durch die Verwendung der Welle als Verklemmelement kein zusätzliches Bauteil als Verklemmelement notwendig ist.

Gemäß einer bevorzugten Ausführungsform ist das Klemmglied als Teil des Blechpakets ausgebildet. Dies ermöglicht eine vorteilhafte Montage und eine stabile Konstruktion.

Gemäß einer bevorzugten Ausführungsform ist das Klemmglied stegförmig ausgebildet. Hierdurch wird eine Verschiebung des Klemmglieds relativ zum übrigen Blechpaket vereinfacht.

Gemäß einer bevorzugten Ausführungsform ist das Klemmglied dazu ausgebildet, ein radial auswärts gerichtetes Verschieben des Klemmglieds durch das Verklemmelement zu ermöglichen. Dadurch wird der Rotormagnet nach außen gedrückt und verklemmt. Dies ist bei der Welle als Verklemmelement effektiver als eine seitliche Verklemmung.

Gemäß einer bevorzugten Ausführungsform weist der Rotormagnet eine radial innere Seite auf, und das Klemmglied ist dazu ausgebildet, den Rotormagneten in der ersten Ausnehmung nur in einem Teilbereich der radial inneren Seite zu verklemmen. Dies verringert die Gefahr einer Beschädigung des Rotormagneten.

Gemäß einer bevorzugten Ausführungsform ist das Verklemmelement aus einem härteren Werkstoff ausgebildet als das Blechpaket. Dies erleichtert das Einpressen bzw. Einschieben des Verklemmelements, das beim Einpressen im vorderen Bereich stark beansprucht werden kann.

Gemäß einer bevorzugten Ausführungsform weist das Verklemmelement eine Schrägung auf, um das Einführen in die zweite Ausnehmung zu erleichtern.

Gemäß einer bevorzugten Ausführungsform ist das Verklemmelement mit der zweiten Ausnehmung zumindest in eine Richtung senkrecht zur Drehachse formschlüssig verbunden. Hierdurch kann sich das Verklemmelement nicht in radialer Richtung bewegen, und dies unterstützt die Verklemmfunktion in alle Richtungen.

Gemäß einer bevorzugten Ausführungsform weist das Klemmglied einen zur zweiten Ausnehmung hin gerichteten Vorsprung auf, welcher von dem Verklemmelement in Richtung zum Rotormagneten kraftbeaufschlagt ist.

Gemäß einer bevorzugten Ausführungsform ragt der Vorsprung des Klemmglieds in die zweite Ausnehmung des Blechpakets hinein, um mit Verklemmelement zusammen zu wirken.

Gemäß einer bevorzugten Ausführungsform erstreckt sich das Klemmglied von der zweiten Ausnehmung bis zur ersten Ausnehmung, um eine Kraftübertragung zwischen dem Verklemmelement und dem Rotormagneten zu verbessern.

Gemäß einer bevorzugten Ausführungsform sind an mindestens einem vorgegebenen Rotorblech des Blechpakets zur Ausbildung des Klemmglieds längs der Erstreckung des Klemmglieds auf einer Seite zumindest bereichsweise eine erste Aussparung und auf der der ersten Seite gegenüberliegenden zweiten Seite zumindest bereichsweise eine zweite Aussparung vorgesehen. Hierdurch wird bei der Montage eine Bewegung des Klemmglieds zum Rotormagneten hin, also eine Relativbewegung zu anderen Teilen des Rotorblechs und des übrigen Blechpakets, und nach der Montage eine gezielte Kraftübertragung vom Verklemmelement zum Rotormagneten hin unterstützt.

Gemäß einer bevorzugten Ausführungsform verlaufen die erste und die zweite Aussparung zumindest bereichsweise parallel zueinander. Durch die parallele Ausgestaltung ist eine radiale Verschiebung des Klemmglieds einfach möglich. Gemäß einer bevorzugten Ausführungsform verlaufen die erste und die zweite Aussparung jeweils zumindest bereichsweise radial. Auch bei einem radialen Verlauf ist eine radiale Verschiebung des Klemmglieds nach außen grundsätzlich möglich, und der radiale Verlauf ermöglicht die Anordnung der ersten und zweiten Aussparung im Winkelbereich zwischen zwei benachbarten ersten Ausnehmungen für die Rotormagneten, also eine Doppelnutzung der ersten und zweiten Aussparung.

Gemäß einer bevorzugten Ausführungsform verlaufen die erste und die zweite Aussparung jeweils gekrümmt, derart, dass sie sich von einem Bereich zwischen der ersten Ausnehmung und der zweiten Ausnehmung sowohl zur ersten Ausnehmung hin als auch zur zweiten Ausnehmung hin zumindest bereichsweise aneinander annähern. Hierdurch entsteht beim Klemmglied ein stabiler mittlerer Bereich, und die Kraft wird nach außen über einen kleineren Bereich übertragen, was den Druck erhöht.

Gemäß einer bevorzugten Ausführungsform sind die erste und die zweite Aussparung jeweils T-förmig ausgebildet. Dies unterstützt zum einen eine Kraftbegrenzung bei der Kraftübertragung durch das Klemmglied, und zum anderen kann das Klemmglied bei einer radialen Bewegung nach außen in die Schenkel der T-förmigen Aussparung hinein bewegt werden, da die Schenkel hierfür Platz bieten.

Gemäß einer bevorzugten Ausführungsform weisen der radial äußere Bereich der ersten Aussparung und der radial äußere Bereich der zweiten Aussparung jeweils zwei schenkelförmige Bereiche auf.

Gemäß einer bevorzugten Ausführungsform haben die schenkelförmigen Bereiche jeweils eine gekrümmte Kontur, um bei einer Verformung des Rotorblechs die Spannungen besser zu verteilen.

Gemäß einer bevorzugten Ausführungsform verlaufen die schenkelförmigen Bereiche von der Mitte aus mit einer Krümmung, so dass die Enden gegenüber einer gedachten Geraden, die senkrecht zur radialen Erstreckung in der Mitte der Aussparung angeordnet ist, nach außen abgewinkelt ist. Hierdurch wird der Druck auf den Rotormagneten positiv beeinflusst.

Gemäß einer bevorzugten Ausführungsform gehen die erste und zweite Aussparung direkt in die Durchgangsöffnung für die Welle über. Hierdurch wird eine radiale Bewegung des Klemmglieds nach außen in diesem Bereich nicht verhindert.

Gemäß einer bevorzugten Ausführungsform sind die erste und zweite Aussparung jeweils mittig zwischen zwei benachbarten Klemmgliedern vorgesehen, um beide Klemmglieder mit auszubilden.

Gemäß einer bevorzugten Ausführungsform ist eine dritte Aussparung vorgesehen, welche sich von der ersten Ausnehmung aus nach innen erstreckt. Dies reduziert bei einer Bewegung des Klemmglieds nach außen tangentiale Kräfte.

Gemäß einer bevorzugten Ausführungsform werden durch die dritte Aussparung bei der ersten Ausnehmung zwei Schenkel, die jeweils auf einer Seite der dritten Aussparung angeordnet sind, wobei bevorzugt die beiden Schenkel auf der radial inneren Seite in einem Bereich miteinander verbunden sind. Die Beiden Schenkel können hierdurch teilentkoppelt von einander auf den Rotormagneten drücken.

Gemäß einer bevorzugten Ausführungsform weist die dritte Aussparung einen ersten Abschnitt auf, der länglich ausgebildet ist und sich von der ersten Ausnehmung aus in radialer Richtung nach innen erstreckt. Dies lässt viel Material für das Klemmglied übrig und führt trotzdem zu einer Aufspaltung in diesem Bereich.

Gemäß einer bevorzugten Ausführungsform weist die dritte Aussparung am inneren Ende des ersten Abschnitts einen gegenüber dem ersten Abschnitt erweiterten zweiten Abschnitt auf. Hierdurch werden Spannungen, die im Klemmglied um den zweiten Abschnitt herum entstehen können, besser verteilt.

Gemäß einer bevorzugten Ausführungsform ist der zweite Abschnitt rund ausgebildet. Hierdurch werden Spannungen, die im Klemmglied um den zweiten Abschnitt herum entstehen können, besser verteilt.

Gemäß einer bevorzugten Ausführungsform weist die maximale radiale Erstreckung der ersten Aussparung nach außen einen ersten Abstand von der Drehachse auf, die maximale radiale Erstreckung der zweiten Aussparung nach außen weist einen zweiten Abstand von der Drehachse auf, und die maximale radiale Erstreckung der dritten Aussparung nach innen weist einen dritten Abstand von der Drehachse auf, wobei der erste Abstand von der Drehachse und der zweite Abstand von der Drehachse jeweils größer sind als der dritte Abstand von der Drehachse. Dies unterstützt das Zusammenwirken von erster, zweiter und dritter Aussparung.

Gemäß einer bevorzugten Ausführungsform ist ein Klemmglied vorgesehen, bei welchem die erste Aussparung, die zweite Aussparung und die dritte Aussparung zusammen spiegelsymmetrisch bezüglich einer ersten Symmetrieachse ausgebildet sind, welche erste Symmetrieachse in radialer Richtung mittig durch die dritte Aussparung verläuft. Hierdurch werden die Kräfte gleichmäßiger verteilt.

Gemäß einer bevorzugten Ausführungsform ist die erste Aussparung spiegelsymmetrisch bezüglich einer zweiten Symmetrieachse ausgebildet, welche zweite Symmetrieachse in radialer Richtung mittig durch die erste Aussparung verläuft. Dies unterstützt insbesondere eine gleichmäßige Verteilung der Kräfte, wenn die erste Aussparung zur Ausbildung von zwei benachbarten Klemmgliedern ausgebildet ist.

Gemäß einer bevorzugten Ausführungsform weist das Rotorblech im Bereich zwischen der ersten Ausnehmung und der zweiten Ausnehmung einen mäanderförmigen Verlauf auf. Hierdurch wird eine gute Bewegung des Klemmglieds ermöglicht, und trotzdem ist das Rotorblech stabil.

Gemäß einer bevorzugten Ausführungsform ist das Klemmglied an seinem der ersten Ausnehmung zugewandten Ende über mindestens einen Steg mit den weiteren Bereichen des zugehörigen Rotorblechs verbunden, und die erste Aussparung oder die zweite Aussparung weist im Bereich des mindestens einen Stegs einen abgewinkelten Bereich auf. Der Steg führt zu einer guten Stabilität des Rotorblechs, und der abgewinkelte Bereich ermöglicht eine Relativbewegung des Klemmglieds in den abgewinkelten Bereich hinein.

Gemäß einer bevorzugten Ausführungsform ist das Klemmglied an seinem der zweiten Ausnehmung zugewandten Ende über mindestens einen Steg mit den weiteren Bereichen des zugehörigen Rotorblechs verbunden, und die erste Aussparung oder die zweite Aussparung weist im Bereich dieses mindestens einen Stegs einen abgewinkelten Bereich auf. Der Steg führt zu einer guten Stabilität des Rotorblechs, und der abgewinkelte Bereich ermöglicht eine Relativbewegung des Klemmglieds in den abgewinkelten Bereich hinein.

Gemäß einer bevorzugten Ausführungsform weist der Elektromotor ein vorgegebenes Rotorblech mit einer eine Anzahl N von ersten Ausnehmungen zur Aufnahme einer Anzahl N von Rotormagneten auf, und das vorgegebene Rotorblech weist eine Anzahl K von Klemmgliedern auf, wobei N = K ist. Da für jeden Rotormagneten ein Klemmglied vorgesehen ist, kann das Rotorblech in jeder Position hinzugefügt werden. Dies vereinfacht die Montage und ermöglicht ein Blechpaket mit nur einem Rotorblech, das Klemmglieder aufweist.

Gemäß einer bevorzugten Ausführungsform weist der Elektromotor zwei vorgegebene Rotorbleche auf, welche jeweils mit einer Anzahl N von ersten Ausnehmungen zur Aufnahme einer Anzahl N von Rotormagneten versehen sind, und es sind jeweils eine Anzahl K von Klemmgliedern vorgesehen, wobei N größer als 1 ist, und wobei K einen Wert hat, der im Bereich von 1 bis N-1 liegt. Hierdurch kann die Klemmkraft auf den einzelnen Rotormagneten erhöht werden, da die Klemmglieder größer ausgebildet werden können, insbesondere im inneren Bereich.

Gemäß einer bevorzugten Ausführungsform weist der Elektromotor mindestens ein erstes Rotorblech mit einem Klemmglied auf, wobei auf mindestens einer Seite des ersten Rotorblechs, bevorzugt auf beiden Seiten des ersten Rotorblechs, mindestens ein weiteres Rotorblech vorgesehen ist. Dies erhöht die Stabilität, da die Klemmglieder an einer Bewegung in die entsprechende axiale Richtung durch das benachbarte Rotorblech gehindert werden.

Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen. Es zeigen:
- Fig. 1: einen Schnitt durch einen mit einem Innenrotor und einem Außenstator versehenen Elektromotor gemäß der Erfindung,
- Fig. 2: eine perspektivische Ansicht eines mit zugeordneten Rotormagneten versehenen Blechpakets gemäß einer ersten Ausführungsform,
- Fig. 3: eine vergrößerte Ansicht eines Ausschnitts 600 von Fig. 2,
- Fig. 4: eine vergrößerte Ansicht eines Ausschnitts 700 von Fig. 3, mit einem am Blechpaket befestigten Verklemmelement,
- Fig. 5: eine Draufsicht auf das mit den zugeordneten Rotormagneten versehene Blechpaket von Fig. 2, mit einem Einpressdorn,
- Fig. 6: ein Draufsicht auf eine zweite Ausführungsform eines Rotorblechs,
- Fig. 7: eine schematische Darstellung der Verformung des Rotorblechs von Fig. 6,
- Fig. 8: eine raumbildliche Explosionsdarstellung eines Blechpakets mit dem Rotorblech von Fig. 6,
- Fig. 9: eine Draufsicht auf eine dritte Ausführungsform eines Rotorblechs, und
- Fig. 10: eine raumbildliche Explosionsdarstellung eines Blechpakets mit dem Rotorblech von Fig. 9.

In der nachfolgenden Beschreibung beziehen sich die Begriffe links, rechts, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben. Zum besseren Verständnis sind die Rotorbleche teilweise durch kleine Punkte und/oder Oberflächenschraffuren verdeutlicht.

### Grundaufbau eines Innenläufermotors

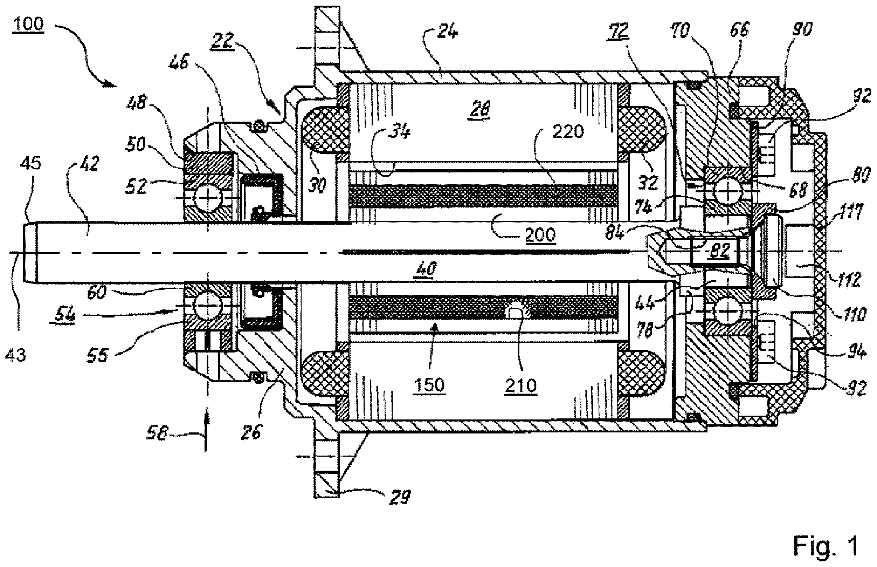

**Fig. 1** zeigt einen mit einem Gehäuse 22 versehenen Elektromotor 100, der bevorzugt nach Art eines elektronisch kommutierten Innenläufermotors ausgebildet ist. Dieser weist einen in dem Gehäuse 22 angeordneten Außenstator 28 sowie einen drehbeweglich in dem Außenstator 28 angeordneten Innenrotor 150 auf.

Dieser ist durch einen magnetisch wirksamen Luftspalt 39 vom Außenstator 28 getrennt.

Das Gehäuse 22 weist beispielhaft ein zylindrisches Gehäuseteil 24, ein A-Lagerschild 26 und einen Befestigungsflansch 29 auf. In dem zylindrischen Gehäuseteil 24 ist ein Blechpaket 27 des Außenstators 28 angeordnet, dessen Wickelköpfe mit den Bezugszeichen 30 und 32 angedeutet sind. Das Blechpaket 27 wird nachfolgend zur besseren Verständlichkeit der Beschreibung als das "Statorblechpaket" bezeichnet. Dieses Statorblechpaket 27 kann in einen Wickel-bzw. Isolierkörper 25 eingebettet sein, der z.B. nach Art einer Kunststoffumspritzung ausgebildet sein kann.

Darüber hinaus hat der Außenstator 28 eine Innenausnehmung 34, in der ein mit mindestens einem und bevorzugt einer Mehrzahl (z.B. 2, 4, 6, 8) von Rotormagneten 220 versehenes Blechpaket 200 des Innenrotors 150 angeordnet ist. Dieses Blechpaket 200, welches auch als "Rotorblechpaket" bezeichnet werden kann, weist mindestens eine und bevorzugt eine Mehrzahl von Ausnehmungen 210 zur Aufnahme der Rotormagneten 220 auf, in welchen die Rotormagneten 220 angeordnet sind. Diese sind gemäß einer Ausführungsform Permanentmagnete.

Das Blechpaket 200 ist auf einer Rotorwelle 40 angeordnet, welche bevorzugt in das Blechpaket 200 eingepresst ist. Die Rotorwelle 40 hat ein freies, äußeres Antriebsende 42 und ein inneres Wellenende 44 und ist zu einer Drehung um eine Drehachse 43 ausgebildet. An einem Ende 42 der Rotorwelle 40 ist eine Fase 45 angeordnet.

Für die Rotorwelle 40 ist im A-Lagerschild 26 eine Dichtung 46 vorgesehen. Ferner befindet sich dort eine Ausnehmung 48, in der ein Führungsglied 50 für einen Außenring 55 eines Wälzlagers 54 befestigt ist. Ein Innenring 60 dieses Wälzlagers 54 ist im Bereich des Antriebsendes 42 um die Rotorwelle 40 herum angeordnet, bevorzugt aufgepresst.

Das innere Wellenende 44 der Rotorwelle 40 ist in einem B-Lagerschild 66 angeordnet, welches an einem dem A-Lagerschild 26 gegenüberliegenden, offenen Ende des zylindrischen Gehäuseteils 24 befestigt ist. Das B-Lagerschild 66 hat eine mit einer Ringschulter versehene Ausnehmung 68 für einen Außenring 70 eines Wälzlagers 72, dessen Innenring 74 auf dem Wellenende 44 befestigt ist. Hierzu hat die Rotorwelle 40 einen Ringbund 78, mit dem sie gegen eine - in Fig. 1 linke - Seite des Innenrings 74 anliegt. Gegen dessen - in Fig. 1 rechte - Seite liegt ein z.B. aus Messing ausgebildetes Formstück 80 an, welches durch einen Senkkopf 110 einer Senkkopfschraube 82 in Richtung zur Rotorwelle 40 gepresst wird und etwa ringförmig ausgebildet ist. Die Schraube 82 ist in ein Innengewinde 84 des Wellenendes 44 eingeschraubt und presst dadurch das Formstück 80 in Richtung des Innenrings 74. Zum sicheren Einspannen des Außenrings 70 des Wälzlagers 72 dient ein bevorzugt flaches, ringförmiges Teil 90, welches durch mehrere gleichmäßig verteilte Schrauben 92, z.B. drei Schrauben 92, an seiner äußeren Peripherie am B-Lagerschild 66 befestigt ist und mit seiner radial inneren Peripherie 94 gegen den Außenring 70 anliegt und diesen - in Fig. 1 nach links - gegen die Schulter 78 presst.

In dem Senkkopf 110 ist bevorzugt ein Steuermagnet befestigt. Dieser ist z.B. auf seiner - in Fig. 1 rechten - Seite mit einem Magnetisierungsmuster versehen und dient zur Steuerung von magnetoresistiven Widerständen 112, welche an einem Gehäusedeckel 117 angeordnet sind und zur Erfassung einer jeweiligen Drehstellung des Innenrotors 150 dienen, um Form und Kommutierung von Motorströmen im Außenstator 28 exakt steuern zu können. Der Gehäusedeckel 117 ist am B-Lagerschild 66 befestigt und dient zur bevorzugt dichten Abschließung des Gehäuses 22.

Es sei noch darauf hingewiesen, dass der oben beschriebene Elektromotor 100 nicht nur als elektronisch kommutierter Innenläufermotor bezeichnet werden kann, sondern in verschiedener Weise bezeichnet werden kann. Z.B. kann der Elektromotor 100 auch als permanent erregte Synchron-Innenläufermaschine, oder als elektronisch kommutierter Motor, oder als Elektromotor mit permanentmagnetischer Erregung bezeichnet werden.

### Rotorpaket mit Klemmgliedern und Rotorwelle als Verklemmelement

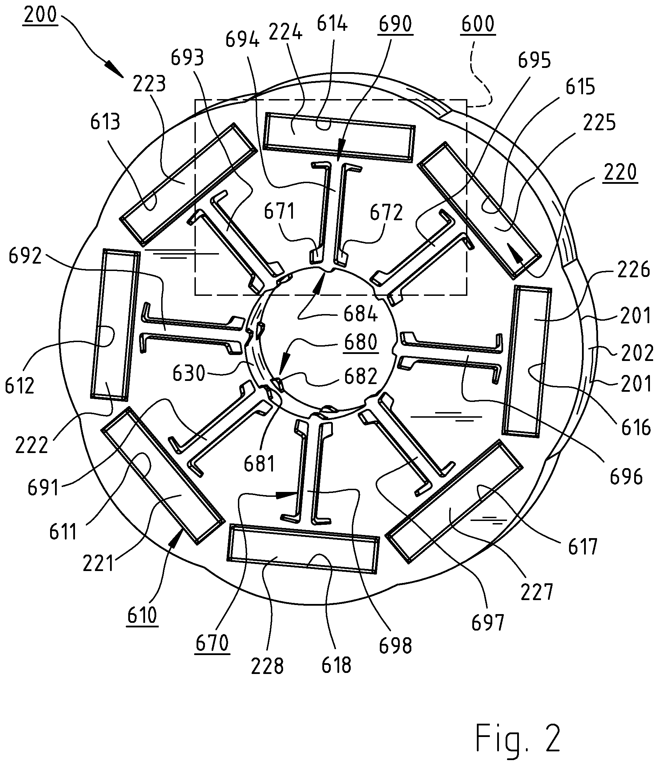

**Fig. 2** zeigt ein Blechpaket 200 gemäß einer ersten Ausführungsform, welches zur Realisierung des Elektromotors 100 von Fig. 1 verwendet werden kann. Das Blechpaket 200 hat Rotorbleche 201, die dazu ausgebildet sind, die Rotormagneten 220 von Fig. 1 nach außen gegen das Blechpaket 200 zu drücken bzw. zu pressen und damit zu fixieren, und Rotorbleche 202, die keine solche Pressfunktion nach außen haben, aber eine Anlagefläche für den nach außen mit einer Kraft beaufschlagten Rotormagneten 220 dienen können. Die Rotorbleche können auch als Blechlamellen bezeichnet werden.

Das Blechpaket 200 ist mit einer Durchgangsöffnung 630 zur Aufnahme der Rotorwelle 40 von Fig. 1 versehen und weist eine Mehrzahl von Ausnehmungen 610 zur Aufnahme der Mehrzahl von Rotormagneten 220 von Fig. 1 auf, wobei die Mehrzahl von Ausnehmungen 610 illustrativ acht Ausnehmungen 611, 612, 613, 614, 615, 616, 617, 618 aufweist. Hierbei ist jeweils einer der Rotormagnete 221, 222, 223, 224, 225, 226, 227, 228 in einer zugeordneten Ausnehmung der Mehrzahl von Ausnehmungen 611, 612, 613, 614, 615, 616, 617, 618 angeordnet, z.B. ist der Rotormagnet 224 in der Ausnehmung 614 angeordnet usw. Die Durchgangsöffnung 630 kann auch als zentrale Durchgangsöffnung 630 oder Ausnehmung 630 bezeichnet werden.

Der Mehrzahl von Ausnehmungen 610 ist eine am Blechpaket 200 ausgebildete Mehrzahl von bevorzugt stegförmig ausgebildeten Klemmgliedern 690 zugeordnet, wobei vorzugsweise jeder der Ausnehmungen 611, 612, 613, 614, 615, 616, 617, 618 jeweils ein separates, stegförmiges Klemmglied 691, 692, 693, 694, 695, 696, 697 bzw. 698 zugeordnet ist. Im Bereich mindestens eines und bevorzugt jedes der Mehrzahl von Klemmgliedern 690 sind einander gegenüberliegende, bevorzugt radial verlaufende Aussparungen 670 angeordnet, welche die Mehrzahl von Klemmgliedern 690 ausbilden, indem sie eine Relativbewegung der Klemmglieder 690 relativ zum übrigen Bereich des Rotorblechs ermöglichen. Zur Vereinfachung und zwecks Übersichtlichkeit der Zeichnung sind lediglich die das Klemmglied 694 ausbildenden Aussparungen mit den Bezugszeichen 671, 672 gekennzeichnet.

Die Aussparungen 671, 672 sind bevorzugt derart ausgebildet, dass sich das Klemmglied 694 von der Durchgangsöffnung 630 bis zur Ausnehmung 614 erstreckt. Die übrigen Aussparungen der Mehrzahl von Aussparungen 670 sind vorzugsweise ähnlich ausgebildet, wie aus Fig. 2 ersichtlich.

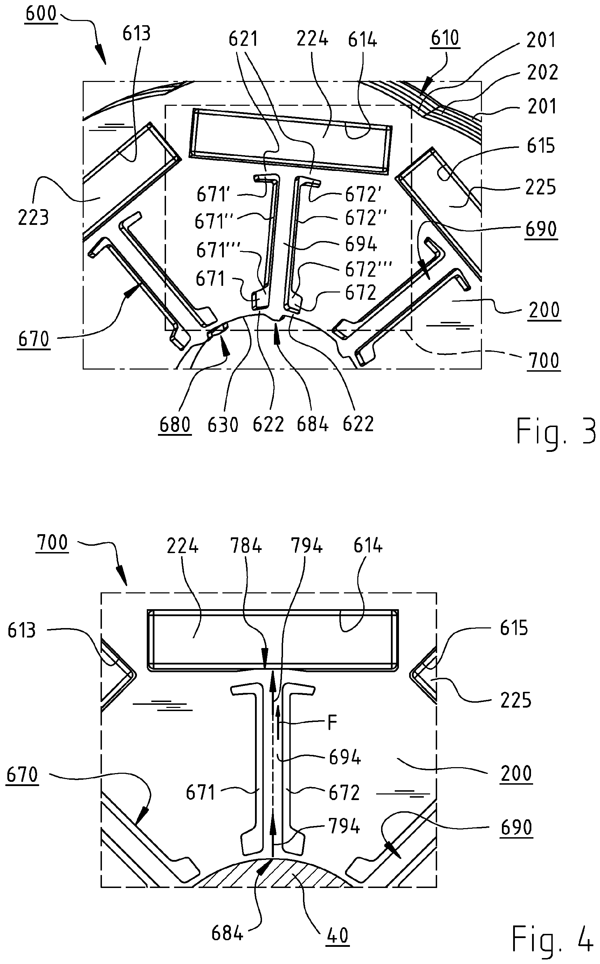

Gemäß der ersten Ausführungsform ist am Blechpaket 200 eine Mehrzahl von Vorsprüngen 680 ausgebildet, welche sich von der Mehrzahl von Klemmgliedern 690 in die Durchgangsöffnung 630 erstrecken. Illustrativ sind im Bereich jedes der Mehrzahl von Klemmgliedern 691 bis 698 zwei in die Durchgangsöffnung 630 eingreifende Vorsprünge vorgesehen, von denen zwecks Einfachheit und Übersichtlichkeit der Zeichnung lediglich die am Klemmglied 691 vorgesehenen Vorsprünge 681, 682 sowie ein am Klemmglied 694 vorgesehener Vorsprung 684 gekennzeichnet sind. Die Mehrzahl von Vorsprüngen 681, 682 kann jeweils durch eine oder mehrere Rotorbleche 201 (vgl. Fig. 3) gebildet werden. Im vorliegenden Beispiel sind das vorderste und das hinterste Rotorblech 201 jeweils zum Festklemmen der Rotormagneten ausgebildet und weisen die Vorsprünge 681, 682 auf, und die mittleren Rotorbleche 202 nicht.

**Fig. 3** zeigt einen vergrößerten Ausschnitt 600 des Blechpakts 200 von Fig. 2, welches illustrativ eine Mehrzahl von gestapelten Rotorblechen 201 aufweist, aus denen die Mehrzahl von Ausnehmungen 610, die Durchgangsöffnung 630 und die Mehrzahl von Aussparungen 670 von Fig. 2 z.B. ausgestanzt oder mittels Laser geschnitten sind. Die Rotorbleche 201, 202 können zur Ausbildung des Blechpakets 200 auf beliebige Art und Weise aneinander befestigt sein, z.B. durch Verschweißen oder Stanzen. Dies wird auch als Stanzpaketieren bezeichnet, bei dem ein Stempel nach jedem Hinzufügen eine Rotorblechs eine eingreifende Noppe formt und dadurch eine Verbindung herstellt. Die Noppen haben dabei beispielsweise eine Tiefe im Bereich von der Hälfte der Dicke des Rotorblechs.

Alternativ hierzu kann anstelle der Mehrzahl von gestapelten Rotorblechen 601, 602 beispielsweise auch Weicheisen oder ein anderes weichmagnetisches Material zur Ausbildung des Blechpakets 200 Anwendung finden. Man spricht daher allgemein von einem Rotorkern bzw. Rotorpaket.

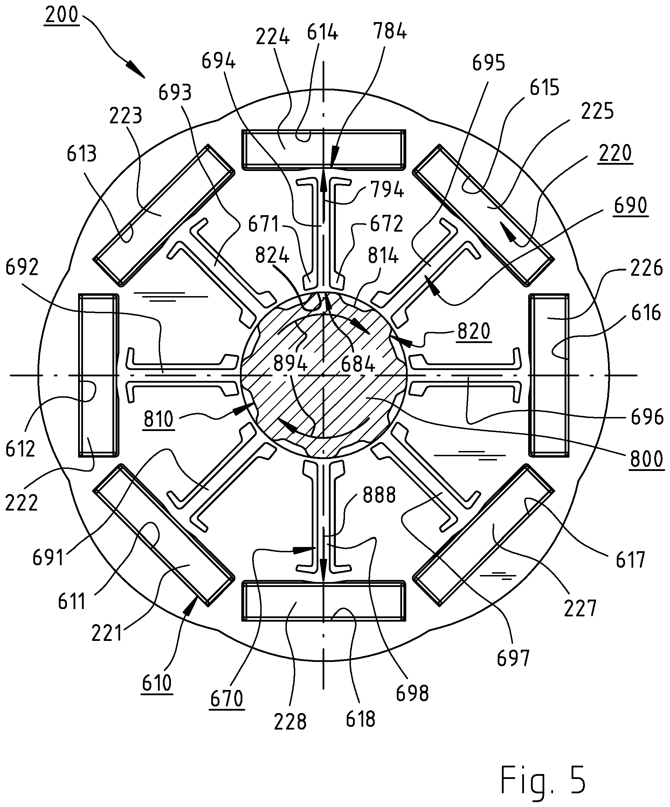

Der vergrößerte Ausschnitt 600 verdeutlicht insbesondere den in der Ausnehmung 614 angeordneten Rotormagneten 224 und die im Bereich zwischen der Ausnehmung 614 und der Durchgangsöffnung 630 angeordneten Aussparungen 671, 672. Diese bilden wie bei Fig. 2 beschrieben das Klemmglied 694 aus, an welchem der in die Durchgangsöffnung 630 eingreifende Vorsprung 684 vorgesehen ist. Dieser ist von einem zugeordneten Verklemmelement in Richtung der Ausnehmung 614 kraftbeaufschlagbar, wie unten bei Fig. 4 und Fig. 5 beschrieben.

Das Klemmglied 694, das sich bevorzugt von der Durchgangsöffnung 630 bis zur Ausnehmung 614 erstreckt, ist bevorzugt über mindestens 70 % seiner Erstreckung auf beiden Seiten von den Aussparungen 671, 672 umgeben, die hierzu einen mittleren Abschnitt 671 ", 672" aufweisen.

Bevorzugt ist das Klemmglied 694 an dem der Ausnehmung 614 zugewandten Ende über mindestens einen Steg 621 mit dem zugehörigen Rotorblech 201 verbunden, und an dem der Durchgangsöffnung 630 zugewandten Ende über mindestens einen Steg 622 mit dem zugehörigen Rotorblech 201 verbunden, um bevorzugt einer Verformung des Klemmglieds in axialer Richtung und in Umfangsrichtung entgegenzuwirken.

Bevorzugt ist der Steg 621 dadurch gebildet, dass die Aussparungen 671, 672 im Bereich des Stegs 621 einen abgewinkelten Bereich 671', 672' aufweisen und in diesem Bereich 671', 672' voneinander weg verlaufen. Dies ermöglicht eine bessere Bewegung des Klemmglieds 694 in Richtung zum Rotormagneten 224 hin.

Bevorzugt ist der Steg 622 dadurch gebildet, dass die Aussparungen 671, 672 im Bereich des Stegs 622 einen abgewinkelten Bereich 671'", 672'" aufweisen und in diesem Bereich 671'", 672'" voneinander weg verlaufen. Dies ermöglicht eine bessere Bewegung des Klemmglieds 694 in Richtung zum Rotormagneten 224 hin, und der Steg 622 wird nicht auf den benachbarten Bereich geschoben, was zu einem Anschlag führen würde und die weitere Bewegung des Klemmglieds 694 behindern würde.

Bevorzugt hat das Klemmglied 694 zumindest bereichsweise eine gleich bleibende Dicke senkrecht zu seiner Erstreckung. Um dies zu erreichen, verlaufen die Aussparungen 671, 672 bevorzugt zumindest auf der dem Klemmglied 694 zugewandten Seite parallel zueinander.

Die Aussparungen 671, 672 bilden bevorzugt im Bereich des Vorsprungs 684 einen Bereich 672"', in den der Vorsprung 684 bei einer Bewegung zum Rotormagneten 224 hin hinein gedrückt werden kann.

**Fig. 4** zeigt eine Vergrößerung eines Ausschnitts 700 von Fig. 4, mit dem von dem Klemmglied 694 in der Ausnehmung 614 verklemmten Rotormagneten 224. Fig. 4 verdeutlicht ein in die Durchgangsöffnung 630 eingepresstes Verklemmelement (Spreizelement), welches gemäß der ersten Ausführungsform von einer dem Blechpaket 200 zugeordneten Rotorwelle, illustrativ der dem Innenrotor 150 von Fig. 1 zugeordneten Rotorwelle 40 von Fig. 1, ausgebildet wird.

Durch das Einpressen ist das Verklemmelement bzw. die Rotorwelle 40 dauerhaft in der Durchgangsöffnung 630 befestigt, so dass der Vorsprung 684 permanent in Längsrichtung des Klemmglieds 694 kraftbeaufschlagt ist. Nach dem Einpressen der Rotorwelle 40 ist der Vorsprung 684 nach außen verschoben, ragt also nicht mehr oder nur noch wenig in die Durchgangsöffnung 630.

Somit ist nach dem Einpressen der Welle 40 auch das Klemmglied 694 mit der vorgegebenen Presskraft F permanent in Richtung der Ausnehmung 614 kraftbeaufschlagt und wird aufgrund dieser permanenten Kraftbeaufschlagung in Richtung der Ausnehmung 614 gedrückt, wie mit einem Pfeil 794 angedeutet. Durch diese Materialverdrängung in die Richtung 794 entsteht in der Ausnehmung 614 eine in die Richtung 794 gerichtete Ausbeulung 784, welche eine vorgegebene, permanente Klemmkraft F auf den Rotormagneten 224 ausübt, sodass der Rotormagnet 224 in der Ausnehmung 614 verklemmt wird. Hierbei weist die Rotorwelle 40 Abmessungen auf, die dazu ausgebildet sind, die Ausübung der vorgegebenen Presskraft F auf den Vorsprung 684 und das Klemmglied 694 und somit die Ausübung der vorgegebenen, permanenten Klemmkraft F durch das Klemmglied 694 bzw. die Ausbeulung 784 auf den Rotormagneten 224 zu ermöglichen.

Die Rotorwelle (hier gleichzeitig Verklemmelement) 40 übt somit einerseits eine Kraft F auf das Klemmglied 694 aus, die das Klemmglied 694 gegen den Magneten 224 drückt. Andererseits wird die Rotorwelle 40 durch ihre Anordnung in der Durchgangsöffnung 630 daran gehindert, eine Bewegung relativ zum Rotormagneten 224 von diesem weg durchzuführen. Die Rotorwelle 40 stützt sich also durch ihre Anordnung in der Öffnung 244 (in alle Richtungen) am Blechpaket 200 ab.

Bevorzugt findet bei der Materialverdrängung zumindest teilweise eine unelastische bzw. plastische Verformung statt, bei welcher das Klemmglied 694 von dem Verklemmelement 40 zumindest teilweise unelastisch von einer ersten geometrischen Form in eine zweite geometrische Form verformt wird und von dem Verklemmelement 40 permanent in dieser zweiten Form gehalten wird. Illustrativ wird das nach Art eines geraden Stegs ausgebildete Klemmglied 694 von dem Verklemmelement 40 durch zumindest teilweise unelastische Verformung radial nach außen gedrückt und von dem Verklemmelement 40 permanent in dieser Form gehalten. Die zumindest teilweise unelastische bzw. plastische Verformung ist daraus ersichtlich, dass das Klemmglied 694 nach einem Entfernen des Verklemmelements 40 nicht vollständig zurück federt.

Bevorzugt ist die Rotorwelle 40 in der Öffnung 244 formschlüssig befestigt, zumindest im Hinblick auf eine Verschiebung senkrecht zur Drehachse 43.

Bevorzugt hat die Rotorwelle 40 eine größere Härte als das Blechpaket 200, damit es beim Einbringen bzw. Einpressen in die Öffnung 244 nicht zerstört wird.

Es wird darauf hingewiesen, dass das Klemmglied 694 bevorzugt dazu ausgebildet ist, den Rotormagneten 224 nur abschnittsweise mit der zugeordneten Klemmkraft F in der Ausnehmung 614 zu verklemmen. Um dies zu erreichen, sind das Klemmglied 694 und der Vorsprung 684 z.B. nicht über die volle Länge der Durchgangsöffnung 630 bzw. nicht über alle Rotorbleche 201, 202 des Blechpakets 200 ausgebildet, sondern nur abschnittsweise. Z.B. sind das Klemmglied 694 und der Vorsprung 684, sowie die Aussparungen 671, 672, nur an einer vorgegebenen Anzahl der Mehrzahl von Rotorblechen 201, 202 von Fig. 3 ausgebildet. Hierbei kann durch eine jeweilige Vorgabe einer jeweiligen Geometrie des Klemmglieds 694 und/oder der vorgegebenen Anzahl der Mehrzahl von Rotorblechen 201 die Presskraft F des Klemmglieds 694 variiert werden. Dies hat auch den Vorteil, dass die Klemmglieder 694 durch die inneren Rotorbleche 202 gegen ein Abknicken in axialer Richtung geschützt werden.

Darüber hinaus wird darauf hingewiesen, dass die oben beschriebene Materialverdrängung erfolgen kann, bevor die Rotorwelle 40 dauerhaft in der Durchgangsöffnung 630 befestigt wird. Hierzu kann ein Einpressdorn (800 in Fig. 5) Anwendung finden, wie unten bei Fig. 5 beschrieben. Alternativ kann das Herauspressen der Klemmglieder 690 auch direkt durch die Welle 40 erfolgen.

Bei einer massiven Ausbildung des Blechpakets 200 ohne die Klemmglieder 691 bis 698 und mit einer kreisrunden Innenöffnung des Blechpakets 200 würde das Einpressen der Rotorwelle 40 zu einer minimalen Bewegung des Blechpakets 200 im inneren Bereich von 10 - 20 µm führen. Hiervon würden die von der Rotorwelle 40 beabstandeten Permanentmagneten 221 bis 228 bzw. das die Permanentmagneten unmittelbar umgebende Material des Blechpakets 200 nichts mitbekommen, und eine Verklemmung wäre nicht möglich.

**Fig. 5** zeigt das Blechpaket 200 von Fig. 2 mit einem Einpressdorn 800 gemäß einer Ausführungsform nach einer Materialverdrängung. Dieser Einpressdorn 800 hat in seiner axialen Richtung Längsnuten 810, zwischen denen Verdrängungsstege 820 ausgebildet sind. Hierbei ist bevorzugt eine identische Anzahl von Längsnuten und Verdrängungsstegen vorgesehen, welche einer Anzahl von vorgesehenen Klemmgliedern entspricht. Zwecks Einfachheit und Klarheit der Zeichnung sind lediglich beispielhaft zwei Längsnuten mit den Bezugszeichen 812, 814 gekennzeichnet, zwischen denen ein Verdrängungssteg 824 ausgebildet ist.

Es wird darauf hingewiesen, dass der Einpressdorn 800 nur beispielhaft als separates Bauteil ausgebildet ist. Der Einpressdorn kann auch Teil der Rotorwelle 40 von Fig. 1 sein oder diese zumindest abschnittsweise ausbilden, oder die Rotorwelle 40 kann am Einführende eine Schräge, Schrägung bzw. Fase (45 in Fig. 1) aufweisen, um ein sanftes Herausdrücken der Klemmglieder 691 bis 698 zu ermöglichen. Die Fase 45 (Fig. 1) kann beispielsweise einen Winkel von 5° und 2 mm axiale Länge haben, wobei dies naturgemäß von der Geometrie des Blechpakets abhängt.

Zur Durchführung der oben bei Fig. 4 beschriebenen Materialverdrängung wird zunächst der Einpressdorn 800 derart in die Durchgangsöffnung 630 eingeführt, dass die Längsnuten 810 und die Mehrzahl von Klemmgliedern 690 fluchten. Z.B. wird der Einpressdorn 800 derart in die Durchgangsöffnung 630 eingeführt, dass das Klemmglied 694 in die Längsnut 814 eingreift.

Dann wird der Einpressdorn 800 verdreht, z.B. in Richtung eines Pfeils 894, sodass die Verdrängungsstege 820 die Mehrzahl von Vorsprüngen 680 in Richtung der zugeordneten Klemmglieder 690 und diese somit in Richtung der zugeordneten Ausnehmungen 610 verdrängen. Hierbei entsteht die oben bei Fig. 4 beschriebene Materialverdrängung des Klemmglieds 694 in Richtung des Pfeils 794. Eine weitere Materialverdrängung ist beispielhaft beim Klemmglied 698 angedeutet, welches in Richtung eines Pfeils 888 zur Ausnehmung 618 hin verdrängt wird.

Anschließend kann der Einpressdorn 800 aus der Durchgangsöffnung 630 entfernt und mit der Rotorwelle 40 von Fig. 1 ersetzt werden. Diese übernimmt somit wie bei Fig. 4 beschrieben die Funktion des Verklemmelements.

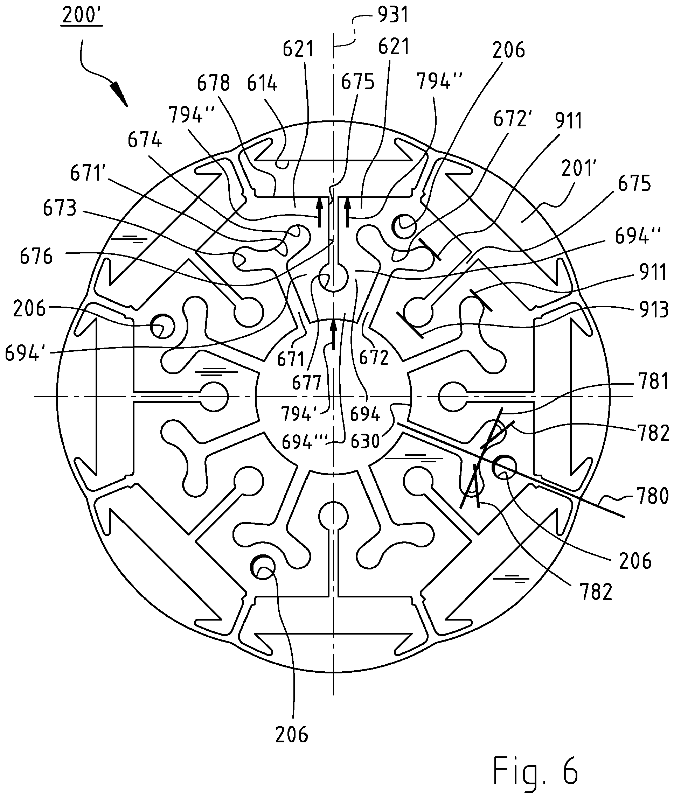

**Fig. 6** zeigt eine zweite Ausführungsform eines Blechpakets 200' mit einem Rotorblech 201', welches Blechpaket 200' für einen Innenläufermotor 100 wie beispielsweise in Fig. 1 einsetzbar ist und vom Grundprinzip dem Blechpaket 200 von Fig. 2 entspricht.

Es sind Ausnehmungen 614 für die in Fig. 1 gezeigten Rotormagneten 220 sowie eine Mehrzahl von Klemmgliedern 694 vorgesehen, die jeweils zwei Aussparungen 671, 672 im Rotorblech 201' aufweisen.

Beim Einpressen der in Fig. 1 dargestellten Welle 40 in das Blechpaket 200' wird das Klemmglied 694 nach außen mit einer durch einen Pfeil 794' angedeuteten Kraft beaufschlagt, und diese Kraft wird durch das Klemmglied 694 (ggf. nach dessen Verformung) auf einen in Fig. 1 dargestellten, in der Aussparung 671 angeordneten Rotormagneten 220 übertragen, wie dies mit den Pfeilen 794" angedeutet ist.

Der radial äußere Bereich 671' der Aussparung 671 und der radial äußere Bereich 672' der Aussparung 672 sind bevorzugt jeweils T-förmig ausgebildet und weisen zwei schenkelförmige Bereiche 673, 674 auf. Die Ausgestaltung des Bereichs 672' mit den schenkelförmigen Bereichen 673, 674 kann auch als knochenförmig bezeichnet werden und erinnert an die Darstellung von Knochen auf Piratenflaggen. Die schenkelförmigen Bereiche 673, 674 haben bevorzugt jeweils eine gekrümmte Kontur, um bei einer Verformung des Rotorblechs 201' die Spannungen besser zu verteilen. Bevorzugt verlaufen die schenkelförmigen Bereiche 673, 674 von der Mitte aus mit einer Krümmung, so dass die Enden gegenüber einer gedachten Geraden 781, die senkrecht zur radialen Erstreckung 780 in der Mitte der Aussparung 671, 672 angeordnet ist, nach außen abgewinkelt ist, wie dies mit der Geraden 782 angedeutet ist.

Bevorzugt gehen die Aussparungen 671, 672 direkt in die Durchgangsöffnung 630 für die Welle 40 über, um in diesem Bereich eine radiale Bewegung des Klemmglieds 694 möglichst wenig zu behindern bzw. die Kräfte nicht in eine falsche Richtung umzulenken. Es ist aber auch ein dünner Verbindungssteg möglich.

Bevorzugt sind die Aussparungen 671, 672 jeweils mittig zwischen zwei benachbarten Klemmgliedern 694 vorgesehen, um beide Klemmglieder 694 mit auszubilden. Bevorzugt sind die Aussparungen 671, 672 jeweils symmetrisch zu einer zugeordneten radial verlaufenden Symmetrieachse 780 ausgebildet, um in beide Richtungen gleich zu wirken.

Bevorzugt ist an der Ausnehmung 614 für den Rotormagneten 220, an deren radial innerer Begrenzung eine Aussparung 675 vorgesehen, die sich von der Ausnehmung 614 bzw. vom darin angeordneten Rotormagneten 220 in Richtung zur Welle 40 (Fig. 1) hin, also nach innen erstreckt. Die Aussparung 675 bewirkt eine Unterbrechung bzw. Aufteilung der radial inneren Seite 678 der Ausnehmung 614. Hierdurch entstehen bei der Ausnehmung 614 zwei Schenkel 694', 694", die jeweils auf einer Seite der Aussparung 677 angeordnet sind. Bevorzugt sind die beiden Schenkel 694', 694" auf der radial inneren Seite in einem Bereich 694'" miteinander verbunden, um bei einer Kraftbeaufschlagung des Klemmglieds 694 durch die Welle 40 zu verhindern, dass sich die Schenkel 694', 694" voneinander weg in den Bereich der Aussparungen 671, 672 bewegen, da dies zu einer Verringerung der Klemmkraft für den Rotormagneten 220 führen würde. Die Ausgestaltung mit den Schenkeln 694', 694" und dem radial innen angeordneten Verbindungsbereich 694'" kann auch als U-förmig oder schleifenförmig bezeichnet werden.

Die maximale radiale Erstreckung der Aussparungen 671 bzw. 672 nach außen ist mit 911 bezeichnet, und sie hat einen ersten Abstand bzw. zweiten Abstand von der Drehachse (Zentrum), liegt also auf einem entsprechenden ersten bzw. zweiten Radius. Die maximale radiale Erstreckung der Aussparungen 675 nach innen ist mit 913 bezeichnet, und sie hat einen dritten Abstand von der Drehachse, liegt also auf einem entsprechenden dritten Radius. Bevorzugt ist der erste Abstand und/oder der zweite Abstand größer als der dritte Abstand, um ein Zusammenwirken der Aussparungen 671, 672 und der Aussparungen 675 zu verbessern. Anders ausgedrückt sind die Aussparungen 671, 672 und die Aussparungen 675 miteinander verzahnt, bzw., die Aussparungen 671, 672 umgreifen jeweils eine Aussparung 675. Man kann auch sagen, dass das Rotorblech 201' im Bereich zwischen den Ausnehmung 614 und der Durchgangsöffnung 630 einen mäanderförmigen Verlauf aufweist, also in diesem Bereich von der Durchgangsöffnung 630 zu einer Ausnehmung 614, dann zurück zur Durchgangsöffnung 630, dann zur nächsten Ausnehmung 614 etc. verläuft.

Bei einer Ausgestaltung des Klemmglieds 694 ohne eine Aussparung 675, wie es z.B. in Fig. 2 gezeigt ist, führt eine Kraftbeaufschlagung des Klemmglieds 694 zum Rotormagneten 220 dazu, dass die radial innere Seite 678 der Ausnehmung 614 gekrümmt wird, und hierdurch entstehen große Kräfte in Umfangsrichtung, die nicht wesentlich zur Fixierung des Rotormagneten 220 beitragen.

Durch die Aussparung 675 führt bei einer Bewegung des Klemmglieds 694 zum Rotormagneten 220 hin die dabei entstehende Krümmung durch die Aufteilung der radial inneren Seite 678 zu einer Entspannungsmöglichkeit hinsichtlich einer Ausdehnung der radial inneren Seite 677, und hierdurch werden die Kräfte in Umfangsrichtung reduziert, und der Druck des Rotorblechs 201' auf den Rotormagneten 220 wird hierdurch erhöht. Es ist auch möglich, bei dem Rotorblech 201 der Fig. 2 eine solche Aussparung 675 vorzusehen.

Bevorzugt verläuft die Aussparung 675 von der Ausnehmung 614 in einem ersten Abschnitt 676 mit einer länglichen Erstreckung in radiale Richtung nach innen.

Bevorzugt weist die Aussparung 675 am radial inneren Bereich des ersten Abschnitts 676 einen verbreiterten zweiten Abschnitt 677 auf. Bevorzugt ist dieser zweite Abschnitt 677 gekrümmt, weiter bevorzugt kreisförmig oder ellipsenförmig. Der zweite Abschnitt 677 ermöglicht zum einen eine bessere Verteilung der in diesem Bereich auftretenden großen Kräfte bzw. Dehnung, wie dies auch in FEM-Berechnungen festgestellt wurde, und zum anderen bewirkt er eine gewisse Federwirkung, indem die radiale Erstreckung des zweiten Abschnitts 677 bei großen Kräften, wie sie z.B. bei einem Rotormagneten 220 mit vergleichsweise großer Dicke entstehen können, verringert wird, wobei sich das Klemmglied 694 radial verbreitern kann. Die Aussparungen 673, 674, 677 können daher auch als kraftbegrenzende Aussparungen oder kraftbegrenzende Elemente bezeichnet werden.

Die für die Innenrotoren verwendeten Magneten werden beispielsweise gesägt, und die Gesamtkosten sind umso höher, je geringer die geforderte Toleranz der Maße der Magneten sind. Daher werden die Magneten mit einem relativ breiten Toleranzfenster von ca. 0,1 mm geliefert, und dies bereitet Schwierigkeiten bei der Montage. Denn es muss zum einen sicher gestellt werden, dass bei einer Verklemmung des dünnsten Magneten eine ausreichende Kraft auf diesen ausgeübt wird, und zum anderen muss sicher gestellt werden, dass bei einer Verklemmung des dicksten Magneten dieser nicht auf Grund zu hoher Klemmkräfte bricht. Dies wird durch die beschriebenen Ausführungsformen ermöglicht.

Die oben beschriebenen Noppen 206 für die Stanzpaketierung sind eingezeichnet. Die Noppen 206 bewirken einen Zusammenhalt der Rotorbleche 201', 202 des Blechpakets 200', haben aber keine unmittelbare Funktion für die Verklemmung der Rotormagneten 220. Der erforderliche Platz muss allerdings bei der Gestaltung der Blechkontur des Rotorblechs 201' berücksichtigt werden.

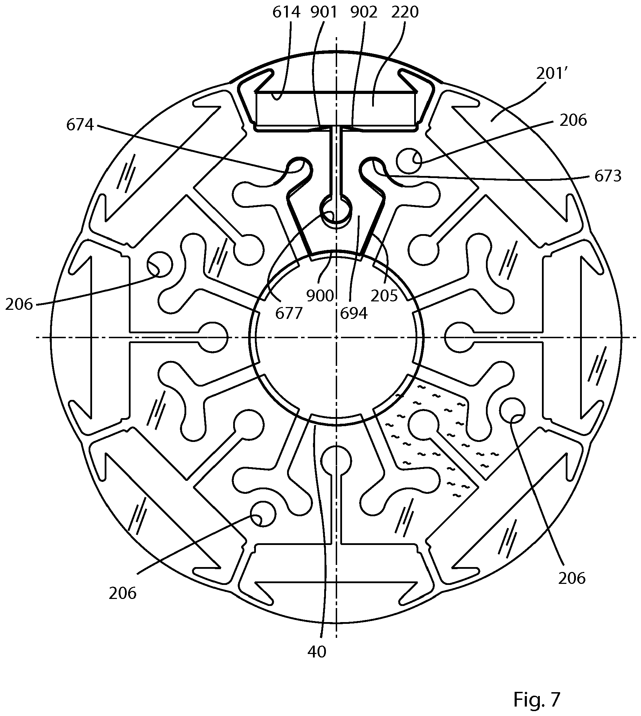

**Fig. 7** zeigt in einer schematischen Darstellung einerseits das Rotorblech 201' entsprechend Fig. 6, also vor dem Einpressen der Welle 40, und andererseits die Welle 40 und mit einer dickeren Linie 205 schematisch dargestellt die Verformung des Rotorblechs 201' im Bereich des Klemmglieds 694. Die Erstreckung eines weiteren Klemmglieds 694 ist unten rechts durch eine Mehrzahl von kleinen geschwungenen Linien (Tilde) angedeutet.

Durch das Einpressen der Rotorwelle 40 ist das Klemmglied 694 permanent nach außen mit einer Kraft beaufschlagt und an einem Zurückfedern gehindert. An der Stelle 900 ist eine Relativbewegung des Klemmglieds 694 gegenüber der ursprünglichen Position radial nach außen erkennbar. Die Aussparung 677 ist in radialer Richtung etwas gestaucht, und die Schenkel 673 und 674 sind ebenfalls etwas in radialer Richtung gestaucht, um eine zu große Kraft auf den Rotormagneten 220 zu vermeiden. Die Bewegung des Klemmglieds 694 führt an den Stellen 901, 902 zu einer Bewegung des Klemmglieds 694 zum Rotormagneten 220 hin und damit zu einer Kraftbeaufschlagung, wobei der Rotormagnet 220 bevorzugt nicht über die gesamte Länge der Innenseite in Kontakt mit dem Klemmglied 694 ist.

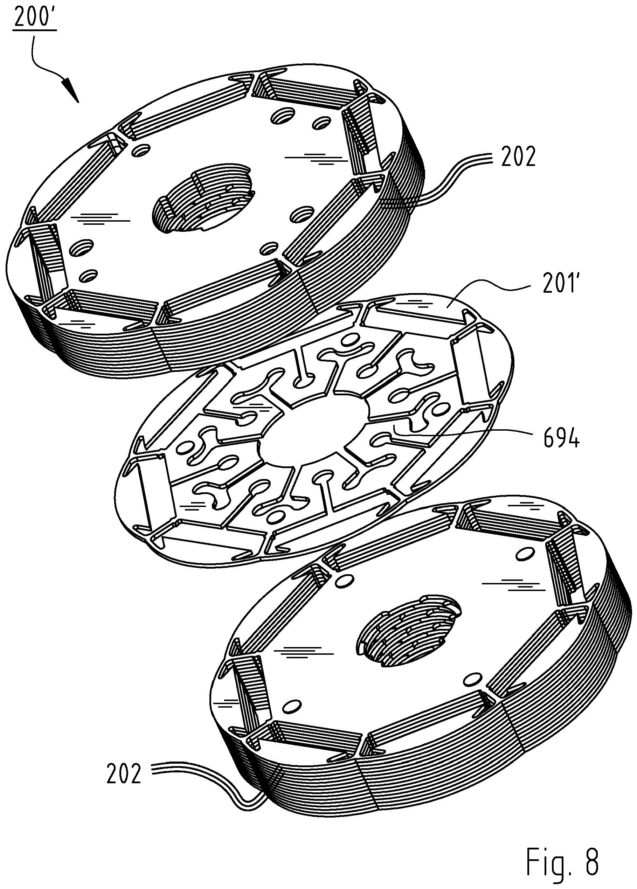

**Fig. 8** zeigt das Blechpaket 200' mit dem Rotorblech 201' mit dem Klemmglied 694 und die übrigen Rotorbleche 202, die denen aus dem ersten Ausführungsbeispiel entsprechen können. Bei der Darstellung handelt es sich zum Teil um eine Explosionsdarstellung, und im fertigen Blechpaket 200' ist bevorzugt auf beiden Seiten des Rotorblechs 201' jeweils mindestens ein Rotorblech 202 vorgesehen, um ein axiales Ausweichen der Klemmglieder 694 zu verhindern. Wie bereits beim ersten Ausführungsbeispiel ausgeführt können auch mehrere Rotorbleche 201' vorgesehen werden, um eine ausreichende Fixierung der Rotormagneten 220 zu erreichen. Dies ist insbesondere abhängig von der Geometrie des Blechpakets 220' und von den maximal zu erwartenden Belastungen im jeweiligen Einsatzbereich.

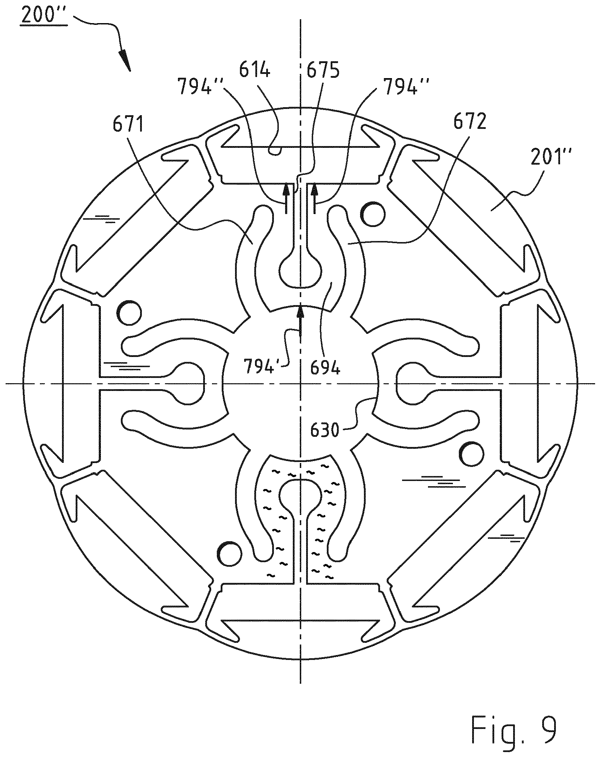

**Fig. 9** zeigt eine dritte Ausführungsform eines Blechpakets 200" mit einem Rotorblech 201", welches für einen Innenläufermotor 100 verwendet werden kann, wie er beispielsweise in Fig. 1 gezeigt ist.

Vom Grundprinzip her ähnelt das Rotorblech 201" den Rotorblechen 201 der ersten Ausführungsform und insbesondere den Rotorblechen 201' der zweiten Ausführungsform.

Im Unterschied hierzu hat das Rotorblech 201" allerdings nicht für jeden Rotormagneten ein Klemmglied 692, 694, sondern nur für einen Teil der Rotormagneten, hier für jeden zweiten Rotormagneten. Dies hat den Vorteil, dass das einzelne Klemmglied 694 eine größere Kraft auf den zugeordneten Rotormagneten 220 ausüben kann als bei der zweiten Ausführungsform, da die durch das Einpressen der Welle 40 bewirkte Kraft auf weniger Klemmglieder 694 verteilt wird und die Klemmglieder auch größer ausgebildet werden können. Eine derartige Ausgestaltung, bei der ein Rotorblech nur einen Teil der Rotormagneten 220 verklemmt, kann auch bei der ersten und zweiten Ausführungsform vorgesehen werden. Die Erstreckung eines weiteren Klemmglieds 694 ist unten durch eine Mehrzahl von kleinen geschwungenen Linien (Tilde) angedeutet.

Um eine Verklemmung aller Rotormagneten 220 zu gewährleisten, kann ein zweites Rotorblech 201" vorgesehen werden, das um 45° zum ersten Rotorblech 201" verdreht wird und dadurch die übrigen Rotormagneten 220 fixiert. Das Rotorblech 201" muss nicht für jeden zweiten Rotormagneten ein Klemmglied 294 aufweisen, sondern es kann z.B. auch für jeden dritten Rotormagneten oder auch nur für einen Rotormagneten ein Klemmglied 294 aufweisen.

Den Klemmgliedern 694 sind bevorzugt jeweils eine Aussparung 675 und zwei Aussparungen 671, 672 zugeordnet, wobei bevorzugt die Aussparung 675 mit der Ausnehmung 614 und die Aussparungen 671, 672 mit der Durchgangsöffnung 630 verbunden sind.

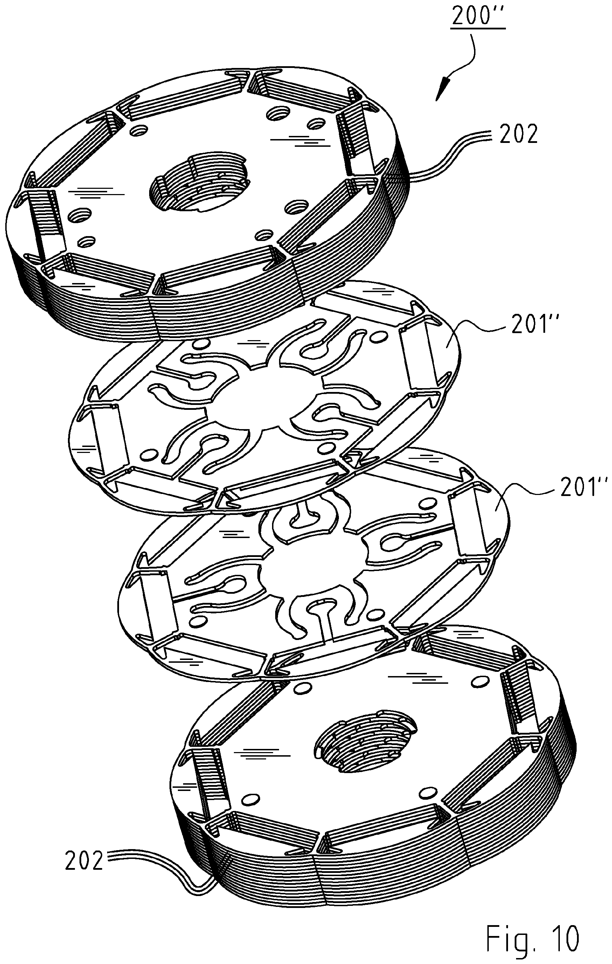

**Fig. 10** zeigt das Blechpaket 200" mit den Rotorblechen 201" und den übrigen Rotorblechen 202, die denen aus dem ersten Ausführungsbeispiel entsprechen können. Bei der Darstellung handelt es sich um eine Explosionsdarstellung, und im fertigen Blechpaket 200" ist bevorzugt auf beiden Seiten des Rotorblechs 201" jeweils mindestens ein Rotorblech 202 oder ein Rotorblech 201" vorgesehen, um ein axiales Ausweichen der Klemmglieder 694 zu verhindern. Es können auch weitere Rotorbleche 201" vorgesehen werden, um eine ausreichende Fixierung der Rotormagneten 220 zu erzielen.

Naturgemäß sind im Rahmen der vorliegenden Erfindung vielfache Abwandlungen und Modifikationen möglich.

So kann an Stelle der Wälzlager z.B. auch ein Sinterlager verwendet werden.

Ein Vorteil der Erfindung liegt in der möglichen Wirkung, dass eine Bewegung des Klemmglieds weg vom Rotormagneten durch das Verklemmelement verhindert wird, und das Verklemmelement wiederum durch das Blechpaket an einer Bewegung weg vom Rotormagneten gehindert wird. Die Kräfte des Klemmglieds weg vom Rotormagneten werden also über das Klemmglied in das Blechpaket eingeleitet, ohne dass hierzu eine Federwirkung zwingend erforderlich ist.

Die gezeigten Innenrotoren haben einen äußeren Durchmesser von (an der maximalen Erstreckung) ca. 35 mm, und der zugehörige Außenstator einen Außendurchmesser von ca. 60 mm. Es sind aber auch größere oder kleinere Motoren möglich.

## Patentansprüche

1. Elektromotor (100), welcher aufweist:
Einen Außenstator (28);
einen in dem Außenstator (28) drehbeweglich angeordneten Innenrotor (150), welcher ein Blechpaket (200; 200'; 200") aufweist, welches eine Mehrzahl von Rotorblechen (201, 202; 201', 201") aufweist und in dem mindestens eine erste Ausnehmung (614) und mindestens eine zweite Ausnehmung (630) vorgesehen sind,
wobei der ersten Ausnehmung (614) ein darin angeordneter Rotormagnet (224) zugeordnet ist,
wobei der zweiten Ausnehmung (630) ein darin angeordnetes Verklemmelement (40) zugeordnet ist,
wobei zwischen der ersten Ausnehmung (614) und der zweiten Ausnehmung (630) ein Klemmglied (692, 694) vorgesehen ist,
und wobei das Verklemmelement (40) und die zweite Ausnehmung (630) dazu ausgebildet sind,
- ein Abstützen des Verklemmelements (40) am Blechpaket (200; 200'; 200") zu ermöglichen, und
- das Klemmglied (692, 694) in Richtung zum Rotormagneten (224) hin mit einer Kraft (F) zu beaufschlagen,
um so den Rotormagneten (224) in der ersten Ausnehmung (614) zu verklemmen,
wobei das Blechpaket (200; 200'; 200") eine Durchgangsöffnung (630) zur Aufnahme einer Welle (40) aufweist,
wobei die zweite Ausnehmung (630) durch die Durchgangsöffnung (630) ausgebildet ist,
und wobei das Verklemmelement (40) durch die Welle (40) ausgebildet ist.

2. Elektromotor nach Anspruch 1, bei welchem das Klemmglied (692, 694) als Teil des Blechpakets (200; 200'; 200") ausgebildet ist.

3. Elektromotor nach einem der vorhergehenden Ansprüche, bei welchem das Klemmglied (692, 694) dazu ausgebildet ist, ein radial auswärts gerichtetes Verschieben des Klemmglieds (694) durch das Verklemmelement (40) zu ermöglichen.

4. Elektromotor nach einem der vorhergehenden Ansprüche, bei welchem das Verklemmelement (40) eine Schrägung (45) aufweist, um das Einführen in die zweite Ausnehmung (630) zu erleichtern.

5. Elektromotor nach einem der vorhergehenden Ansprüche, bei welchem das Klemmglied (692, 694) einen zur zweiten Ausnehmung (630) hin gerichteten Vorsprung (684) aufweist, welcher Vorsprung (684) von dem Verklemmelement (40) in Richtung zum Rotormagneten (224) kraftbeaufschlagt ist.

6. Elektromotor nach einem der vorhergehenden Ansprüche, bei welchem sich das Klemmglied (694) von der zweiten Ausnehmung (630) bis zur ersten Ausnehmung (614) erstreckt.

7. Elektromotor nach einem der vorhergehenden Ansprüche, bei welchem an mindestens einem vorgegebenen Rotorblech (201; 201', 201") des Blechpakets (200; 200'; 200") zur Ausbildung des Klemmglieds (692, 694) längs der Erstreckung des Klemmglieds (692, 694) auf einer Seite zumindest bereichsweise eine erste Aussparung (671) und auf der der ersten Seite gegenüberliegenden zweiten Seite zumindest bereichsweise eine zweite Aussparung (672) vorgesehen sind.

8. Elektromotor nach Anspruch, bei welchem
- die erste und die zweite Aussparung (671, 672) zumindest bereichsweise parallel zueinander verlaufen,
- oder bei welchem die erste und die zweite Aussparung (671, 672) jeweils zumindest bereichsweise radial verlaufen,
- oder bei welchem die erste und die zweite Aussparung (671, 672) jeweils gekrümmt verlaufen, derart, dass sie sich von einem Bereich zwischen der ersten Ausnehmung (614) und der zweiten Ausnehmung (630) sowohl zur ersten Ausnehmung (614) hin als auch zur zweiten Ausnehmung (630) hin zumindest bereichsweise aneinander annähern.

9. Elektromotor nach einem der Ansprüche 7 oder 8, bei welchem die erste und die zweite Aussparung (671, 672) jeweils T-förmig ausgebildet sind.

10. Elektromotor nach einem der Ansprüche 7 bis 9, bei welchem eine dritte Aussparung (675) vorgesehen ist, welche sich von der ersten Ausnehmung (614) aus nach innen erstreckt.

11. Elektromotor nach Anspruch 10, bei welchem die dritte Aussparung (675) einen ersten Abschnitt (676) aufweist, der länglich ausgebildet ist und sich von der ersten Ausnehmung (614) in radialer Richtung nach innen erstreckt.

12. Elektromotor nach Anspruch 11, bei welchem die dritte Aussparung am inneren Ende des ersten Abschnitts (676) einen gegenüber dem ersten Abschnitt (676) erweiterten zweiten Abschnitt (677) aufweist.

13. Elektromotor nach einem der Ansprüche 10 bis 12,
bei welchem die maximale radiale Erstreckung (911) der ersten Aussparung (671) nach außen einen ersten Abstand von der Drehachse hat,
bei welchem die maximale radiale Erstreckung der zweiten Aussparung (672) nach außen einen zweiten Abstand von der Drehachse hat,
bei welchem die maximale radiale Erstreckung der dritten Aussparung (675) nach innen einen dritten Abstand von der Drehachse hat,
wobei der erste Abstand und der zweite Abstand jeweils größer sind als der dritte Abstand.

14. Elektromotor nach einem der Ansprüche 10 bis 13, bei welchem das Rotorblech (201') im Bereich zwischen der ersten Ausnehmung (614) und der zweiten Ausnehmung (630) einen mäanderförmigen Verlauf aufweist.

15. Elektromotor nach einem der Ansprüche 7 bis 14, bei welchem das Klemmglied (692, 694) an seinem der ersten Ausnehmung (614) zugewandten Ende über mindestens einen Steg (621) mit den weiteren Bereichen des zugehörigen Rotorblechs (201, 201', 201") verbunden ist, und
bei welchem die erste Aussparung (671) oder die zweite Aussparung (672) im Bereich des mindestens einen Stegs (621) einen abgewinkelten Bereich (671', 672') aufweist.

## Claims

1. Electric motor (100) which comprises:
an external stator (28);
an internal rotor (150), which is rotatably arranged in the external stator (28) and has a laminated core (200; 200'; 200") which comprises a plurality of rotor laminations (201, 202; 201', 201") and in which at least one first cutout (614) and at least one second cutout (630) are provided,
wherein the first cutout (614) is associated with a rotor magnet (224) arranged therein, wherein the second cutout (630) is associated with a jamming element (40) arranged therein,
wherein a clamping member (692, 694) is provided between the first cutout (614) and the second cutout (630),
and wherein the jamming element (40) and the second cutout (630) are designed to:
- allow the jamming element (40) to be supported on the laminated core (200; 200'; 200"),
- apply a force (F) to the clamping member (692, 694) in a direction towards the rotor magnets (224)
in order to clamp the rotor magnets (224) in the first cutout (614),
wherein the laminated core (200; 200'; 200") has a through-opening (630) for receiving a shaft (40),
wherein the second cutout (630) is formed by the through-opening (630),
and wherein the jamming element (40) is formed by the shaft (40).

2. Electric motor according to claim 1, wherein the clamping member (692, 694) is formed as part of the laminated core (200; 200'; 200").

3. Electric motor according to either of the preceding claims, wherein the clamping member (692, 694) is formed so as to allow a radially outwardly directed displacement of the clamping member (694) by the jamming element (40).

4. Electric motor according to any of the preceding claims, wherein the jamming element (40) is formed having a bevelled region (45) in order to facilitate introduction into the second cutout (630).

5. Electric motor according to any of the preceding claims, wherein the clamping member (692, 694) has a projection (684) directed towards the second cutout (630), to which projection (684) force is applied by the jamming element (40) in the direction towards the rotor magnets (224).

6. Electric motor according to any of the preceding claims, wherein the clamping member (694) extends from the second cutout (630) to the first cutout (614).

7. Electric motor according to any of the preceding claims, wherein, on at least one specified rotor lamination (201; 201', 201") of the laminated core (200; 200'; 200") along the extension of the clamping member (692, 694), a first recess (671) is provided at least in regions on one side, and a second recess (672) is provided at least in regions on the second side opposite the first side, in order to form the clamping member (692, 694).

8. Electric motor according to claim 7, wherein
- the first and second recesses (671, 672) extend in parallel with one other, at least in regions,
- or wherein the first and second recesses (671, 672) each extend radially, at least in regions
- or wherein the first and second recesses (671, 672) each extend in a curved manner in such a way that, from a region between the first cutout (614) and the second cutout (630), and towards the first cutout (614) and towards the second cutout (630), said recesses approach one another at least in regions.

9. Electric motor according to either claim 7 or claim 8, wherein the first and second recesses (671, 672) are each T-shaped.

10. Electric motor according to any of claims 7 to 9, wherein a third recess (675) is provided, which extends inwardly from the first cutout (614).

11. Electric motor according to claim 10, wherein the third recess (675) has a first portion (676) which is elongate and extends from the first cutout (614) in a radially inward direction.

12. Electric motor according to claim 11, wherein, at an inner end of the first portion (676), the third recess has a second portion (677) which is wider than the first portion (676).

13. Electric motor according to any of claims 10 to 12,
in which the maximum outward radial extension (911) of the first recess (671) has a first spacing from the rotation axis,
in which the maximum outward radial extension of the second recess (672) has a second spacing from the rotation axis,
in which the maximum inward radial extension of the third recess (675) has a third spacing from the rotation axis,
wherein the first spacing and the second spacing are each larger than the third spacing.

14. Electric motor according to any of claims 10 to 13, wherein, in the region between the first cutout (614) and the second cutout (630), the rotor lamination (201') has a meandering course.

15. Electric motor according to any of claims 7 to 14, wherein, at its end facing the first cutout (614), the clamping member (692, 694) is connected by at least one bridge (621) to the other regions of the rotor lamination (201, 201', 201") associated therewith, and wherein, in the region of the at least one bridge (621), the first recess (671) or the second recess (672) has an angled region (671', 672').

## Revendications

1. Moteur électrique (100) comprenant :
un stator extérieur (28) ;
un rotor intérieur (150) logé dans ledit stator extérieur (28), avec mobilité rotatoire, et muni d'un regroupement de tôles (200 ; 200' ; 200") qui compte une pluralité de tôles rotoriques (201, 202 ; 201', 201"), et dans lequel sont prévus au moins un premier évidement (614) et au moins un second évidement (630),
un aimant rotorique (224) étant associé audit premier évidement (614), dans lequel il est disposé,
un élément de blocage (40) étant associé audit second évidement (630), dans lequel il est disposé,
un organe de coincement (692, 694) étant prévu entre ledit premier évidement (614) et ledit second évidement (630),
ledit élément de blocage (40) et ledit second évidement (630) étant réalisés en vue
- de permettre audit élément de blocage (40) de prendre appui sur le regroupement de tôles (200 ; 200' ; 200"), et
- de solliciter l'organe de coincement (692, 694) par une force (F), en direction de l'aimant rotorique (224),
de manière à coincer ledit aimant rotorique (224) dans ledit premier évidement (614), ledit regroupement de tôles (200 ; 200' ; 200") présentant un orifice de passage (630), destiné à recevoir un arbre (40),
le second évidement (630) étant matérialisé par ledit orifice de passage (630), et ledit élément de blocage (40) étant matérialisé par ledit arbre (40).

2. Moteur électrique selon la revendication 1, dans lequel l'organe de coincement (692, 694) est réalisé en tant que partie du regroupement de tôles (200 ; 200' ; 200").

3. Moteur électrique selon l'une des revendications précédentes, dans lequel l'organe de coincement (692, 694) est réalisé de manière à autoriser, sous l'action de l'élément de blocage (40), un déplacement dudit organe de coincement (694) dirigé vers l'extérieur dans le sens radial.

4. Moteur électrique selon l'une des revendications précédentes, dans lequel l'élément de blocage (40) est pourvu d'un biseau (45), afin de faciliter l'insertion dans le second évidement (630).

5. Moteur électrique selon l'une des revendications précédentes, dans lequel l'organe de coincement (692, 694) est muni d'une saillie (684) dirigée vers le second évidement (630), laquelle saillie (684) peut être sollicitée, en direction de l'aimant rotorique (224), par une force émanant de l'élément de blocage (40).

6. Moteur électrique selon l'une des revendications précédentes, dans lequel l'organe de coincement (694) s'étend du second évidement (630) au premier évidement (614).

7. Moteur électrique selon l'une des revendications précédentes, dans lequel, en vue de former l'organe de coincement (692, 694), une première découpe (671) est prévue d'un côté au moins par zones, dans au moins une tôle rotorique prédéfinie (201 ; 201' ; 201") du regroupement de tôles (200 ; 200' ; 200"), le long de l'étendue dudit organe de coincement (692, 694), une deuxième découpe (672) étant prévue, au moins par zones, sur le second côté tourné à l'opposé du premier côté.

8. Moteur électrique selon la revendication 7, dans lequel
- les première et deuxième découpes (671, 672) s'étendent parallèlement l'une à l'autre, au moins par zones,
- ou dans lequel lesdites première et deuxième découpes (671, 672) s'étendent respectivement dans le sens radial, au moins par zones,
- ou dans lequel lesdites première et deuxième découpes (671, 672) présentent respectivement un tracé arqué, de façon telle qu'elles se rapprochent l'une de l'autre au moins par zones, tant en direction du premier évidement (614) qu'en direction du second évidement (630), à partir d'une région située entre ledit premier évidement (614) et ledit second évidement (630).

9. Moteur électrique selon l'une des revendications 7 ou 8, dans lequel les première et deuxième découpes (671, 672) sont respectivement réalisées avec configuration en T.

10. Moteur électrique selon l'une des revendications 7 à 9, dans lequel est prévue une troisième découpe (675) s'étendant vers l'intérieur à partir du premier évidement (614).

11. Moteur électrique selon la revendication 10, dans lequel la troisième découpe (675) comporte un premier tronçon (676) de réalisation allongée, qui s'étend radialement vers l'intérieur à partir du premier évidement (614).

12. Moteur électrique selon la revendication 11, dans lequel la troisième découpe est dotée, à l'extrémité intérieure du premier tronçon (676), d'un second tronçon (677) élargi par rapport audit premier tronçon (676).

13. Moteur électrique selon l'une des revendications 10 à 12,
dans lequel l'étendue radiale maximale (911) de la première découpe (671) présente, vers l'extérieur, une première distance par rapport à l'axe de rotation,
dans lequel l'étendue radiale maximale de la deuxième découpe (672) présente, vers l'extérieur, une deuxième distance par rapport audit axe de rotation,
dans lequel l'étendue radiale maximale de la troisième découpe (675) présente, vers l'intérieur, une troisième distance par rapport audit axe de rotation,
ladite première distance et ladite deuxième distance étant respectivement supérieures à ladite troisième distance.

14. Moteur électrique selon l'une des revendications 10 à 13, dans lequel la tôle rotorique (201') présente une allure en forme de méandres dans la région située entre le premier évidement (614) et le second évidement (630).

15. Moteur électrique selon l'une des revendications 7 à 14, dans lequel l'organe de coincement (692, 694) est relié par son extrémité pointant vers le premier évidement (614), par l'intermédiaire d'au moins une membrure (621), aux régions restantes de la tôle rotorique (201 ; 201' ; 201") associée, et
dans lequel la première découpe (671) ou la deuxième découpe (672) est pourvue d'une zone coudée (671', 672') dans la région de ladite membrure (621) à présence minimale.
